# EUROPEAN PATENT SPECIFICATION

(11) **EP 3 042 542 B1**
(45) Date of publication and mention of the grant of the patent: **14.06.2017**
(21) Application number: 13753889.8
(22) Date of filing: 03.09.2013
(51) Int. Cl.: H05B 6/12, H05B 6/06

(54) **AN INDIVIDUAL COOKWARE CONTROL DEVICE FOR USE WITH AN INDUCTION HEATING COOKER, AND WIRELESS COOKING SYSTEM HAVING THE SAME**
INDIVIDUELLE KOCHGESCHIRRSTEUERUNGSVORRICHTUNG ZUR VERWENDUNG MIT EINEM INDUKTIONSHERD UND DRAHTLOSES KOCHSYSTEM DAMIT
DISPOSITIF DE COMMANDE DE BATTERIE DE CUISINE INDIVIDUELLE DESTINÉ À ÊTRE UTILISÉ AVEC UN APPAREIL DE CUISSON À CHAUFFAGE PAR INDUCTION, ET SYSTÈME DE CUISSON SANS FIL LE COMPRENANT

(43) Date of publication of application: 13.07.2016
(73) Proprietor: Arçelik Anonim Sirketi, 34950 Istanbul (TR)
(72) Inventor: HAZIR, Sefa, 34950 Istanbul (TR); YAMAN, Onur, 34950 Istanbul (TR); YORUKOGLU, Ahmet, 34950 Istanbul (TR); SOZEN, Ahmet, 34950 Istanbul (TR); TEZEL, Yagiz, 34950 Istanbul (TR)
(86) International application number: PCT/EP2013/068123
(87) International publication number: WO 2015/032419

(56) References cited:
- EP-A2- 2 222 133
- WO-A1-2010/080738
- WO-A1-2013/103939
- WO-A2-2004/008923
- FR-A1- 2 582 896

## Description

The present invention relates to a cookware control device suitable for use with an induction heating cooker, and a wireless cooking system including a cookware control device and an induction heating cooker. The present invention particularly relates to a cookware control device which monitors the actual temperature of a cookware on a cooktop of an induction heating cooker.

Wireless kitchen appliances which are operable on induction heating cookers by inductive power transmission are generally known. Wireless kitchen appliances are active appliances such as kettles, toasters, mixers and the like. There are also active appliances which have been devised for the purpose of monitoring the actual temperature of a passive appliance such as a cookware placed on a cooktop of an induction cooking appliance. Thereby, the user can be informed on the actual temperature of the cookware.

WO 2010/ 080738 A discloses a smart cookware for use on an induction heating cooker. The smart cookware has a wirelessly powered smart handle which is capable of monitoring its own temperature. The smart cookware adjusts the actual temperature by instructing the induction heating cooker to change its power output to the induction cooktop.

This type of smart cookware generally facilitates the cooking process. However such a smart cookware is relatively expensive.

An objective of the present invention is to provide a cookware control device and a wireless cooking system which have improved usability and functionality and overcome the drawbacks of the prior art.

This objective has been achieved by the cookware control device according to the present invention as defined in claim 1, the wireless cooking system according to the present invention as defined in claim 12. Further achievements have been attained by the subject-matters respectively defined in the dependent claims.

The cookware control device according to the present invention is provided in form of an individual device. i.e., it is provided separately from a cookware and also separately from an induction heating cooker. The individual cookware control device has a transportable casing which includes a receiver coil for sensing a time-varying electromagnetic field produced by an induction coil of the induction heating cooker, a power supply unit for producing supply voltage, wherein the power supply unit has a rectifier and a regulator electrically connected to the receiver coil, a temperature sensing unit having a temperature sensor for sensing a temperature of the cookware, and outputting the sensed temperature, a user interface unit for receiving a user input and for audibly and/or visually outputting information to the user and a control unit for controlling operation of the user interface unit and for receiving the sensed temperature output from the temperature sensing unit. The casing is formed by a base portion and an outer portion. The base portion is flat and has a size of a cooking zone of the cooktop, for placing any cookware thereon. The outer portion is integrally provided with the base portion, at a location outside the cooking zone of the cooktop. The receiver coil is enclosed inside the base portion, whereas the user interface unit is disposed on the outer portion. A contact-type temperature sensor is movably supported across a range extending into a cooking zone of the cooktop, and resiliently abutted against a sidewall of a cookware placed in the cooking zone of the cooktop. Thereby, different cookware with respectively different radii can be used on the cookware control device.

In an embodiment of the individual cookware control device, the user can input, via the user interface unit a target temperature for the cookware. The user interface unit audibly and/or visually informs the user when the actual temperature of cookware reaches the target temperature.

In another embodiment, the individual cookware control device has a metal plate such as a disc to enable conductive heating of all kinds of cookware including cookware having a non-metallic base made from glass, ceramic and the like.

In another embodiment of the individual cookware control device, an additional temperature sensor is used to sense a temperature of the metal plate. The user is audibly and/or visually alerted before the metal plate becomes hot.

In another embodiment, the individual cookware control device has a wireless communication means which enables a one-way communication to transmit control information to the induction heating cooker for controlling functions of the induction heating cooker in accordance with a user input.

In another embodiment, the individual cookware control device has a wireless communication means which enables a two-way communication with the induction heating cooker.

In another embodiment, the individual cookware control device has a communication means which is capable of demodulating a frequency-modulated electromagnetic wave (FM signal) produced by the induction coil of the induction heating cooker. Thereby the induction heating cooker can communicate with the individual cookware control device without requiring an additional aerial.

In another embodiment, the individual cookware control device has an overflow sensor, preferably an optical sensor, a capacitive sensor or an acoustical sensor. In case of overflowing, the user is audibly and/or visually informed or operation of the induction coil is altered or particularly halted by transmitting control information to the induction heating cooker.

In another embodiment of the individual cookware control device, the user is audibly and/or visually informed on the current power transmitted from the induction coil of the induction heating cooker. The power transmission is estimated by monitoring an electromotive force (emf) induced across the receiver coil.

The individual cookware control device of the present invention can be used with any kind of inductive type cookware which is ordinarily available on the market. In addition, the individual cookware control device of the present invention can also be used with non-ferromagnetic based cookware, such as ceramic or glass cookware which is highly temperature sensitive. The cookware to be used with the individual cookware control device of the present invention is not restricted to have a particular shape, radius, or material. The individual cookware control device of the present invention can also be effectively used at low operating power levels of an induction heating cooker. The individual cookware control device of the present invitation does not require the inductive cooktop to have a particular size and can be installed on any cooktop.

Additional advantages of the individual cookware control device and the wireless cooking system according to the present invention will become apparent with the detailed description of the embodiments with reference to the accompanying drawings in which:
Figure 1 - is a schematic block diagram of a wireless cooking system including an individual cookware control device and an induction heating cooker according to an embodiment of the present invention.
Figure 2 - is a schematic view of the wireless cooking system including the individual cookware control device and the induction heating cooker according to an embodiment of the present invention.

The reference signs appearing on the drawings relate to the following technical features.
- 1.: Cookware control device
- 2.: Cooktop
- 3.: Induction heating cooker
- 4.: Casing
- 5.: Receiver coil
- 6.: Induction coil
- 7.: Power supply unit
- 8.: Temperature sensing unit
- 9.: Temperature sensor
- 10.: Cookware
- 11.: User interface unit
- 12.: Control unit
- 13.: Base portion
- 14.: Outer portion
- 15.: Support means
- 16.: Wireless cooking system
- 17.: Gap
- 18.: Inverter
- 19.: Cooker control unit

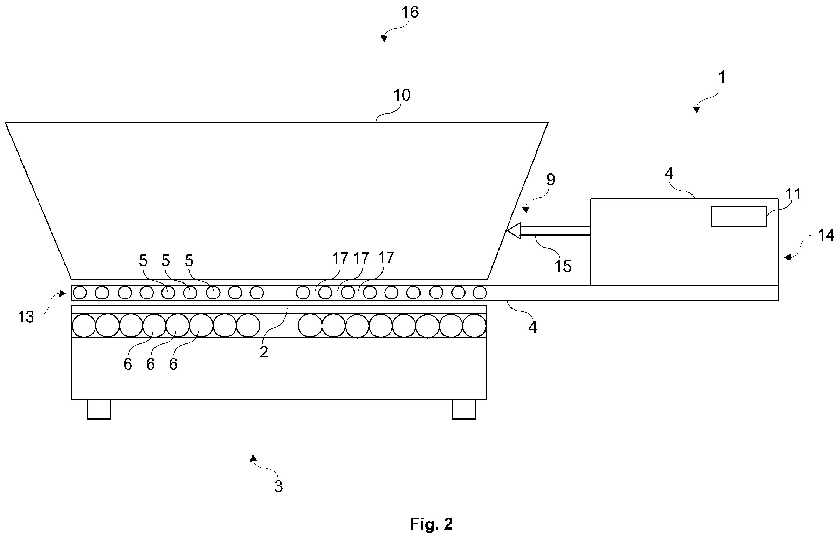

The cookware control device (1) is suitable for use on cooktop (2) of an induction heating cooker (3) (Fig. 2).

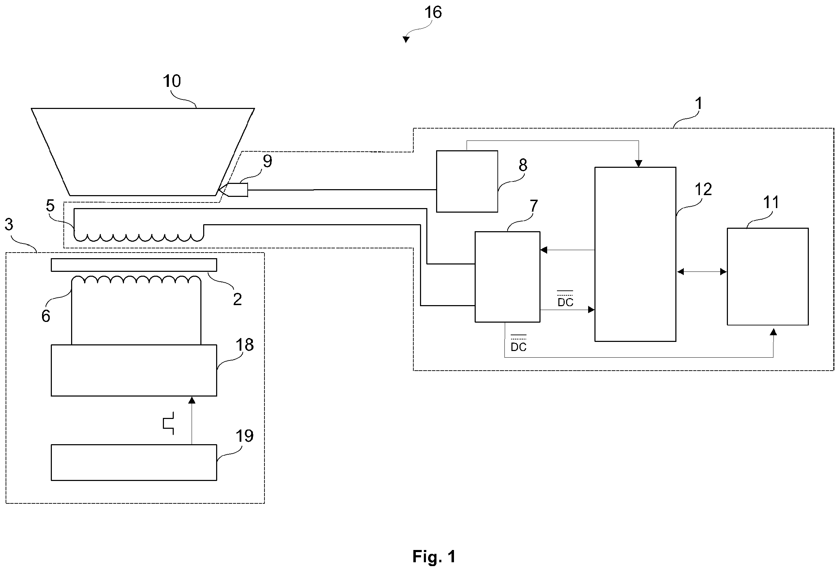

The cookware control device (1) according to the present invention is an individual device (Fig. 2). The individual cookware control device (1) according to the present invention comprises a casing (4) which includes a receiver coil (5) for sensing a time-varying electromagnetic field produced by an induction coil (6) of the induction heating cooker (3), a power supply unit (7) for producing supply voltage, wherein the power supply unit (7) has a rectifier and a regulator electrically connected to the receiver coil (5), a temperature sensing unit (8) having a temperature sensor (9) for sensing a temperature of a cookware (10), and outputting the sensed temperature, a user interface unit (11) for receiving a user input and for audibly and/or visually outputting information to the user, a control unit (12) for controlling operation of the user interface unit (11) and for receiving the sensed temperature output from the temperature sensing unit (8). The casing (4) is formed by a flat base portion (13) which has a size of a cooking zone of the cooktop (2), for placing a cookware (10) thereon, and by an outer portion (14) which is located outside the cooking zone of the cooktop (2) and which is integrally provided with the base portion (13). The receiver coil (5) is enclosed inside the base portion (13). The user interface unit (11) is disposed on the outer portion (14) (Figs. 1 and 2).

In an embodiment, the power supply unit (7), the temperature sensing unit (8), and the control unit (12) are installed in the outer portion (14) of the casing (4) (Figs. 1 and 2). Thereby, a slim base portion (13) is attained and the energy efficiency is increased.

In an embodiment, the receiver coil (5) is formed by a slim and flat spiral winding which is horizontally arranged in the base portion (13). Thereby, a magnetic flux through the receiver coil (5) is increased. Consequently, sufficient electrical energy can be generated by the receiver coil (5) even at low operating power levels of the induction heating cooker (3). The winding includes at regularly spaced predetermined turns thereof, a plurality of corresponding gaps (17) (Fig. 2). The gaps (17) have a predetermined size (Fig. 2). Due to the gapped structure of the winding, the time-varying electromagnetic field uniformly impinges on the base of the cookware (10). Consequently, the cooking process is not restrained and the energy efficiency is further increased.

The induction heating cooker (1) comprises a cooktop (2) for placing the individual cookware control device (1) thereon, an induction coil (6) for generating a time-varying electromagnetic field, an inverter (18) for driving the induction coil (6), and a cooker control unit (19) for controlling the inverter (18) (Figs. 1 and 2).

In an embodiment of the individual cookware control device (1), the user interface unit (1) is configured to allow the user to input a target temperature for the cookware (10) (Fig. 2). In this embodiment, the control unit (12) is configured to cause the user interface unit (11) to audibly and/or visually inform the user when the sensed temperature of cookware (10) reaches the target temperature (Fig. 2).

In another embodiment of the individual cookware control device (1), the temperature sensor (9) is a contact-type temperature sensor (9) (Fig. 2). The temperature sensor (9) has a positive temperature coefficient resistor (PTC). Alternatively, a temperature sensor (9) having a negative temperature coefficient resistor (NTC) can be used. In this embodiment, the temperature sensing unit (8) has a support means (15) which is configured to movably support the contact-type temperature sensor (9) across a predetermined range which extends into the cooking zone of the cooktop (2) (Fig. 2). The support means (15) is further configured to resiliently about the contact-type temperature sensor (9) against a sidewall of the cookware (10) which is placed in the cooking zone of the cooktop (2) (Fig. 2). The support means (15) is formed by an arm which radially moves into and out of the cooking zone (Fig. 2). The arm is biased towards the center of the cooking zone by a biasing mechanism (not shown).

In another embodiment of the individual cookware control device (1), the arm is a telescopic arm (not shown).

In alternative embodiment of the individual cookware control device (1), the contact-type temperature sensor (9) is arranged in a gap (17) of the winding and projects through the base portion (13) to abut against a bottom the cookware (10) placed in the cooking zone of the cooktop (2). In this embodiment, the temperature sensor (9) has a positive temperature coefficient resistor (PTC). Alternatively a temperature sensor (9) having a negative temperature coefficient resistor (NTC) can be used.

In another embodiment of the individual cookware control device (1), the temperature sensor (9) and the receiver coil (5) are detachably attachable to the casing (4) and are rendered dish-washer safe.

In another embodiment, the individual cookware control device (1) has a metal plate (not shown) made from a material which has a relatively high magnetic permeability to enable conductive heating of all kinds cookware (10), including non-metallic cookware (10) made from glass, ceramic or the like. In this embodiment, the metal plate is irremovably rests on the base portion (13) for placing the cookware (10) thereon.

In alternative embodiment of the individual cookware control device (1), the metal plate integrally forms an upper surface of the base portion (13) for placing the cookware (10) thereon.

In another embodiment of the individual cookware control device (1), the temperature sensing unit (8) has an additional temperature sensor (not shown) for sensing a temperature of the metal plate. In this embodiment, the control unit (12) is configured to cause the user interface unit (11) to audibly and/or visually alert the user if the temperature of the metal plate exceeds a threshold temperature which constitutes a health risk for the user.

In another embodiment, the individual cookware control device (1) comprises: an RF communication means (not shown) which includes an RF transmitter and an aerial, for enabling a one-way radio communication to transmit control information to the induction heating cooker (3) for controlling the induction heating cooker (3) in accordance with a user input. In this embodiment, the user input includes at least one of a target temperature for the cookware (10), cooking duration, a type of the cookware (10), delay amount for starting cooking, termination of cooking such as a termination forced by the user, and resumption-request of cooking in case of black out. In this embodiment, the control information includes: settings for adjusting a power level for operating the induction coil (6) in accordance with the target temperature to be reached and maintained for the cooking duration, settings for a heating-profile to be applied to the induction coil (6) in accordance with the type of the cookware (10) and the target temperature to be reached and maintained for the cooking duration, settings for starting operation of the induction coil (6) in accordance with the delay amount for start of cooking, settings for halting operation of the induction coil (6) in accordance with termination of the cooking or the cooking duration or overflowing, settings for powering down the induction heating cooker (3) in accordance with termination of the cooking or cooking duration, settings for resuming cooking after blackout over.

In another embodiment of the individual cookware control device (1), the aerial (not shown) is a separate RF coil which is embedded into the receiver coil (5).

In another embodiment of the individual cookware control device (1), the RF communication means (not shown) further includes an RF receiver, in addition to the RF transmitter, for enabling a two-way radio communication with the induction heating cooker (3).

In another embodiment of the individual cookware control device (1), the RF communication means (not shown) further includes an RF demodulator to demodulate a frequency modulated electromagnetic wave produced by the induction coil (6) of the induction heating cooker (3).

In another embodiment of the individual cookware control device (1) comprising an overflow sensor (not shown) for mounting on a rim of the cookware (10) and for sensing overflowing in the cookware (10). In this embodiment, the overflow sensor is preferably one of an optical sensor, a capacitive sensor or an acoustical sensor. In this embodiment, the control unit (12) is configured to cause, in case of overflowing, the user interface unit (11) to audibly and/or visually inform the user about the overflowing and/or to transmit control information to the induction heating cooker (3) to halt operation of the induction coil (6).

In another embodiment of the individual cookware control device (1), the control unit (12) is configured to monitor an electromotive force (emf) induced across the receiver coil (5) and a temporal evolution of the temperature of the cookware (10), to estimate a power being transmitted to the cookware (10) on the basis of the monitored electromotive force (emf), to refresh and verify the estimation during the monitoring, and to cause the user interface unit (11) to audibly and/or visually inform the user on the currently estimated power transmission.

The wireless cooking system (16) according to the present invention includes the individual cookware control device (1) as described in any one of the above embodiments, and the induction heating cooker (3) with corresponding functionality (Fig. 2).

In an embodiment of wireless cooking system (16), the induction heating cooker (3) has a wireless communication means (not shown). In this embodiment, the cooker control unit (19) is configured to control the inverter (18) in accordance with control information including the aforementioned settings received from the individual cookware control device (1).

The individual cookware control device (1) of the present invitation is provided as an independent device which is generally compatible with all kind of cookware (10) such as pans, pots and the like regardless of their size, shape and material. The individual cookware control device (1) of the present invitation is portable and can be flexibly installed and wirelessly operated on any kind of inductive cooktop (2). The individual cookware control device (1) of the present invitation is compatible with different kinds of sensors, such as an overflow sensor, overheating sensor and the like which further facilitate cooking. Thereby, the individual cookware control device (1) of the present invitation has improved usability and functionality.

## Claims

1. An individual cookware control device (1) for use on a cooktop (2) of an induction heating cooker (3), comprising a casing (4) including:
- a receiver coil (5) for sensing a time-varying electromagnetic field produced by an induction coil (6) of the induction heating cooker (3),
- a power supply unit (7) for producing supply voltage, wherein the power supply unit (7) has a rectifier and a regulator electrically connected to the receiver coil (5),
- a temperature sensing unit (8) having a temperature sensor (9) for sensing a temperature of a cookware (10), and outputting the sensed temperature,
- a user interface unit (11) for receiving a user input and for audibly and/or visually outputting information to the user,
- a control unit (12) for controlling operation of the user interface unit (11) and for receiving the sensed temperature output from the temperature sensing unit (8), wherein the casing (4) is configured by a flat base portion (13) having a size of a cooking zone of the cooktop (2), for placing the cookware (10) thereon, and an outer portion (14) outside the cooking zone of the cooktop (2) which is integrally provided with the base portion (13), wherein the receiver coil (5) is enclosed inside the base portion(13), and the user interface unit (11) is disposed on the outer portion(14),
wherein the temperature sensor (9) is a contact-type temperature sensor, and the temperature sensing unit (8) has a support means (15) configured to movably support the temperature sensor (9) across a predetermined range extending into the cooking zone of the cooktop (2), and to resiliently about the temperature sensor (9) against a sidewall of the cookware (10) placed in the cooking zone of the cooktop (2).

2. The individual cookware control device (1) according to claim 1, **characterized in that** the power supply unit (7), temperature sensing unit (8), and the control unit (12) are installed in the outer portion (14) of the casing (4).

3. The individual cookware control device (1) according to claim 1 or 2, **characterized in that** the user interface unit (11) is configured to allow the user to input a target temperature for the cookware (10) and the contra I unit (12) is configured to cause the user interface unit (11) to audibly and/or visually inform the user when the sensed temperature of the cookware (10) reaches the target temperature.

4. The individual cookware control device (1) according to any one of claims 1 to 3, **characterized in that** a metal plate made from a material which has high magnetic permeability to enable conductive heating of all kinds of cookware (10), including non-metallic cookware (10) made from glass, ceramic and the like, wherein the metal plate configures an upper surface of the base portion (13) for placing the cookware (10) thereon.

5. The individual cookware control device (1) according to claim 4, **characterized in that** the temperature sensing unit (8) has an additional temperature sensor for sensing a temperature of the metal plate and the control unit (12) is configured to cause the user interface unit (11) to audibly and/or visually alert the user if the temperature of the metal plate exceeds a threshold temperature.

6. The individual cookware control device (1) according to any one of claims 1 to 5, **characterized in that** an RF communication means including an RF transmitter and an aerial, for enabling a one-way radio communication to transmit control information to the induction heating cooker (3) for controlling the induction heating cooker (3) in accordance with a user input, wherein the user input includes at least one of a target temperature for the cookware (10), cooking duration, a type of the cookware (10), delay amount for starting cooking, termination of cooking, and resumption-request of cooking in case of blackout, and wherein the control information includes settings for adjusting an operating power level of the induction coil (6) in accordance with the target temperature to be reached and maintained for the cooking duration, settings for a heating-profile to be applied to the induction coil (6) in accordance with the type of the cookware (10) and the target temperature to be reached and maintained for the cooking duration, settings for starting operation of the induction coil (6) in accordance with the delay amount of start cooking, settings for halting operation of the induction coil (6) in accordance with termination of the cooking or the cooking duration or overflowing, settings for powering down the induction heating cooker (1) in accordance with termination of the cooking or cooking duration, settings for resuming cooking after a blackout is over.

7. The individual cookware control device (1) according to claim 6, **characterized in that** the aerial is a separate RF coil embedded into the receiver coil (5).

8. The individual cookware control device (1) according to any one of claim 6 or 7, **characterized in that** the RF communication means further includes an RF receiver, in addition to the RF transmitter, for enabling a two-way radio communication with the induction heating cooker (3).

9. The individual cookware control device (1) according to claim 8, **characterized in that** the RF communication means further includes an RF demodulator to demodulate a frequency modulated electromagnetic wave produced by the induction coil (6) of the induction heating cooker (3).

10. The individual cookware control device (1) according to any one of claims 1 to 9, **characterized in that** an overflow sensor for mounting on a rim of the cookware (10) and for sensing overflowing in the cookware (10) and the control unit (12) is configured to cause, in case of overflowing, the user interface unit (11) to audibly and/or visually inform the user about the overflowing or, when dependent on claim 6 to 9, to transmit control information to the induction heating cooker (3) to halt operation of the induction coil (6).

11. The individual cookware control device (1) according to any one of claims 1 to 10, **characterized in that** the control unit (12) is configured to monitor an electromotive force (emf) induced across the receiver coil (5) and a temporal evolution of the temperature of the cookware (10), to estimate a power being transmitted to the cookware (10) on the basis of the monitored electromotive force (emf), to refresh and verify said estimation during the monitoring, and to cause the user interface unit (11) to audibly and/or visually inform the user on the currently estimated power transmission.

12. A wireless cooking system (16) comprising the individual cookware control device (1) according to any one of claims 1 to 11 and the induction heating cooker (3).

## Patentansprüche

1. Zur Verwendung auf der Kochfläche (2) eines ein Gehäuse (4) umfassenden Induktionsherdes (3) eine, die nachfolgend aufgeführten beinhaltende unabhängige Kochgeschirr Überwachungs- und Steuervorrichtung (1) umfassend;
- eine Empfangsspule (5) zum Erfassen des durch die Induktionsspule (6) des Induktionsherdes (3) erzeugten zeitlich wechselnd elektromagnetischen Feldes,
- eine Stromquelle (7) zur Erzeugung der Versorgungsspannungen, wobei hier die Stromquelle (7) einen mit dem Gleichrichter und der Empfangsspule (5) elektrisch verbundenen Regler aufweist,
- eine Temperaturerfassungseinheit (8) zur Erfassung der Temperatur des Kochgeschirrs (10) und einen Temperaturfühler (9) zur Übermittlung der erfasstenTemperatur,
- eine Benutzer-Informationsschnittstelleneinheit (11) zum Empfang der Benutzereingaben um den Benutzer akustisch und/oder visuell zu informieren,
- eine Steuereinheit (12) zur Steuerung des Benutzerschnittstelleneinheit (11) Betriebes und dem Empfang der der durch die Temperaturerfassungseinheit (8) erfassten Temperatur
wobei hier die Kammer (4) mit einem Basisteil (13) in der Größe der Kochzone eines Kochfeldes (2) zur Platzierung eines Kochgeschirrs (10) und einem außerhalb des mit dem Basisteil (13) integrierten Kochfeldes (2) befindlichem Außenteil (14) konfiguriert ist; wobei hier die Empfangsspule (5) im Basisteil (13) und die Benutzerschnittstelleneinheit (11) auf dem Außenteil (14) angeordnet ist,
**dadurch gekennzeichnet dass**
hier der Temperaturfühler (9) ein Kontakttyp- Temperaturfühler ist und die Temperaturerfassungseinheit (8) zur Unterstützung der Fortbewegung des Temperaturfühlers (9) entlang einer vorgegebenen Strecke, die sich von der Kochfläche (2) über die Kochzone erstreckt, und zur Unterstützung der gleitend flexiblen Bewegung des Temperaturfühlers (9) zur Seitenwand des innerhalb der Kochzone der Kochfläche (2) platzierten Kochgeschirrs (10) konfigurierte Unterstützungselemente (15) aufweist.

2. Unabhängige Kochgeschirr Überwachungs- und Kontrollvorrichtung (1) nach Anspruch 1, **gekennzeichnet, durch** die Montage der Stromversorgungseinheit (7), der Temperaturerfassungseinheit (8) und der Steuereinheit (12) in den Außenteil (14) der Kammer (4) eingebaut sind.

3. Unabhängige Kochgeschirr Überwachungs- und Kontrollvorrichtung (1) nach einem der Ansprüche 1 bis 2, **gekennzeichnet, durch** Konfigurieren der Benutzerschnittstelleneinheit (11) für die Zulassung der Eingabe einer Solltemperatur für ein Kochgeschirr (10) durch den Benutzer und konfigurieren der Steuereinheit (12) derart, dass beim Erreichen der erfassten Temperatur des Kochgeschirrs (10) an die Solltemperatur die akustisch und/oder visuelle Benachrichtigung des Benutzers über die Benutzerschnittstelleneinheit (11) ermöglicht kann.

4. Unabhängige Kochgeschirr Überwachungs- und Kontrollvorrichtung (1) nach einem der Ansprüche 1 bis 3, **gekennzeichnet, durch** eine aus irgendeinem Material mit hoher magnetische Permeabilität hergestellte Metallplatte, die die leitende Erhitzung aller Arten von Kochgeschirr (10) einschließlich Glas, Keramik und dergleichen, nicht metallischen Kochgeschirr (10) ermöglicht, konfigurieren der Oberfläche des Basisteils (13) hier derart, dass auf die Metallplatte das Kochgeschirr (10) platziert werden kann.

5. Unabhängige Kochgeschirr Überwachungs- und Kontrollvorrichtung (1) nach Anspruch 4, **gekennzeichnet, durch** Aufweisen der Temperaturerfassungseinheit (8) einen zusätzlichen Temperaturfühler zur Erfassung der Temperatur der Metallplatte und konfigurieren der Steuereinheit (12) derart, dass wenn die Temperatur der Metallplatte einen Schwellentemperaturwert übersteigt, eine akustisch und/oder visuelle Benachrichtigung des Benutzers über die Benutzerschnittstelleneinheit (11) ermöglicht werden kann.

6. Unabhängige Kochgeschirr Überwachungs- und Kontrollvorrichtung (1) nach einem der Ansprüche 1 bis 5, **gekennzeichnet, durch** Erhalten nach irgendeiner Benutzereingabe, zur Überwachung und Kontrolle der Induktionsherdes (3), zwecks Mitteilung der Kontrollinformationen an den Indiktionsherd (3), dieser eine Antenne und einen HF-Sender umfassenden HF-Kommunikationselemente, Umfassen mindestens einer Zieltemperatur zur Wiederaufnahme des Kochens hier nach der Benutzereingabe für das Kochgeschirr (10), die Kochzeit, die Kochgeschirrart (10), die Wartezeit vom Start bis zum Kochen, die Garbeendigung und im Falle von Stromausfällen, und Erhalten hier die Kontroll- und Steuerinformation der erforderlichen Einstellungen zum Einstellen des Betätigungsniveaus der Induktionsspule (6) zur Erhaltung der Kochzeit und entsprechend der Zieltemperatur, Umfassen der erforderlichen Einstellungen für die Kochzeit je nach der zu erhaltenen und zu erreichenden Solltemperatur und des Kochgeschirrtypen (10) entsprechend des auf die Induktionsspule (6) anzuwenden Temperaturprofils, Umfassen der Einstellungen, die den Start des Betriebs der Induktionsspule (6) entsprechend der Verzögerungszeit bis zum Beginn des Kochens ermöglicht, Umfassen der Einstellungen zur Betriebsaussetzung der Induktionsspule (6) gemäß der Kochzeit oder bei Überlauf oder der Garzeit Beendigung, Umfassen der Einstellungen zum Abstellen des Induktionsherdes (1) nach Beendigung des Kochens oder gemäß der Kochzeit enthält, die Einstellungen zum Weiterkochen nach Beendigung des Stromausfalls.

7. Unabhängige Kochgeschirr Überwachungs- und Kontrollvorrichtung (1) nach Anspruch 6, **gekennzeichnet, durch** die Spule, die in der Empfangsspule (5) angeordnete Antenne eine separate RF (Radiofrequenz) Spule ist.

8. Unabhängige Kochgeschirr Überwachungs- und Kontrollvorrichtung (1) nach einem der Ansprüche 6 oder 7, **gekennzeichnet, durch** Erhalten der HF-Kommunikationseinheit zusätzlich für die Sicherstellung einer Zwei-Wege-Funkkommunikation mit dem Induktionsherd (3) zusätzlich zum HF-Sender einen RF-Empfänger.

9. Unabhängige Kochgeschirr Überwachungs- und Kontrollvorrichtung (1) nach Anspruch 8, **gekennzeichnet, durch** Erhalten der HF-Kommunikationseinheit zusätzlich einen RF-Demodulator zum demodulieren der elektromagnetischen Wellen, die durch den Frequenzmodulator der Induktionsspule (6) des Induktionsherdes (3) erzeugt werden.

10. Unabhängige Kochgeschirr Überwachungs- und Kontrollvorrichtung (1) nach einem der Ansprüche 1 bis 9, **gekennzeichnet, durch** konfigurieren der Steuereinheit (12) und des zur Feststellung des überhöhten Auflaufes im Kochgeschirr (10) und zur Erfassung des Überlaufs aus dem Kochgeschirr an den Rand des Kochgeschirrs (10) angebrachte Überlaufsensors derart, dass im Falle des Überlaufs eine akustisch und/oder visuelle Benachrichtigung des Benutzers über die Benutzerschnittstelleneinheit (11) betreffend dem Überlauf sichergestellt werden kann oder konfigurieren in Abhängigkeit der Ansprüche 6 bis 9 derart, dass zur Aussetzung des Betriebes der Induktionsspule (6) die Übertragung der Kontroll- und Steuerinformationen an den Induktionsherd (3) gewährleistet.

11. Unabhängige Kochgeschirr Überwachungs- und Kontrollvorrichtung (1) nach einem der Ansprüche 1 bis 10, **gekennzeichnet durch** konfigurieren der Schnittstelleneinheit (11) zwecks Schätzung der elektromotorischen Kraft (emf)i die von der Empfangsspule (5) der Steuereinheit (12) ausgeht und an das Kochgeschirr (10) weitergeleitet wird, zum Anzeigen der zeitlichen Änderung der Temperatur des Kochgeschirrs (10) auf Basis der angezeigten elektromotorischen Kraft (emf), zur Aktualisierung und Verifizierung der Schätzung während des Anzeigeprozesses und zur Sicherstellung der akustischen und / oder visuellen Weiterleitung der bereits geschätzten Kraftübertragung an den Benutzer.

12. Ein kabelloses Kochsystem (16) **gekennzeichnet durch** Erhalten eines Induktionsherds (3) und einer unabhängigen Kochgeschirr Überwachungs- und Kontrollvorrichtung (1) nach einem der Ansprüche 1 bis 11.

## Revendications

1. Un appareil de commande individuel des articles culinaires (1) destiné à être utilisé sur une table de cuisson (2) d'une cuisinière de cuisson par induction (3), comprenant un boîtier (4) comprenant:
- une bobine de réception (5) pour détecter un champ électromagnétique variable dans le temps produit par une bobine d'induction (6) de la cuisinière de chauffage par induction (3),
- une unité d'alimentation électrique (7) pour produire une tension d'alimentation, dans laquelle l'unité d'alimentation (7) comportant un redresseur et un régulateur connectés électriquement à la bobine réceptrice (5),
- une unité de détection de température (8) ayant un capteur de température (9) pour détecter la température d'un article culinaire (10), et sortir la température détectée,
- une unité d'interface utilisateur (11) pour recevoir une entrée utilisateur et pour sortir de manière audible et/ou visuelle des informations vers l'utilisateur,
- une unité de commande (12) pour commander le fonctionnement de l'unité d'interface utilisateur (11) et pour recevoir la sortie de température détectée de l'unité de détection de température (8), dans lequel le boîtier (4) est configuré par une partie de base plate (13) ayant une dimension d'une zone de cuisson de la table de cuisson (2) pour y placer l'article culinaire (10) et une partie extérieure (14) à l'extérieur de la zone de cuisson de la table de cuisson (2) qui est pourvue intégralement de la partie de base (13), dans lequel la bobine de réception (5) est enfermée à l'intérieur de la partie de base (13), et l'unité d'interface utilisateur (11) est disposée sur la partie extérieure (14),
dans lequel le capteur de température (9) est un capteur de température du type à contact, et l'unité de détection de température (8) comporte un moyen de support (15) configuré pour supporter de manière mobile le capteur de température (9) sur une plage prédéterminée s'étendant dans la zone de cuisson de la surface de cuisson (2), et de façon élastique autour du capteur de température (9) contre une paroi latérale de l'article culinaire (10) placée dans la zone de cuisson de la table de cuisson (2).

2. Un appareil de commande individuel des articles culinaires (1) selon la revendication 1, **caractérisé en ce que** l'unité d'alimentation (7), l'unité de détection de température (8) et l'unité de commande (12) sont installées dans la partie extérieure (14) du boîtier (4).

3. Appareil de commande individuel des articles culinaire (1) selon la revendication 1 ou 2, **caractérisé en ce que** l'unité d'interface utilisateur (11) est configurée pour permettre à l'utilisateur d'entrer une température cible pour l'article culinaire (10) et l'unité contre I (12) est configurée pour forcer l'unité d'interface utilisateur (11) à informer audiblement et / ou visuellement l'utilisateur lorsque la température détectée de l'article culinaire (10) atteint la température cible.

4. Appareil de commande individuel des articles culinaire (1) selon l'une quelconque des revendications 1 à 3, **caractérisé en ce que** une plaque métallique faite en matériau possédant une perméabilité magnétique élevée pour permettre le chauffage par conduction de tous les types des articles culinaires (10), y compris les articles culinaires non métalliques (10) en verre, en céramique etc, dans lequel la plaque métallique configure une surface supérieure de la partie de base (13) pour y placer l'article culinaire (10).

5. Appareil de commande individuel des articles culinaires (1) selon la revendication 4, **caractérisé en ce que** l'unité de détection de température (8) comporte un capteur de température supplémentaire pour détecter une température de la plaque métallique et l'unité de commande (12) est configurée pour forcer l'interface utilisateur (11) pour alerter audiblement et / ou visuellement l'utilisateur si la température de la plaque métallique dépasse une température seuil.

6. Appareil de commande individuel des articles culinaires (1) selon l'une quelconque des revendications 1 à 5, **caractérisé en ce qu'**un moyen de communication RF comprenant un émetteur RF et une antenne pour permettre à une communication radio unidirectionnelle pour transmettre des informations de commande à la cuisinière de chauffage par induction (3) pour commander le cuiseur de chauffage par induction (3) selon une entrée d'utilisateur, dans lequel l'entrée d'utilisateur comprend au moins l'une d'une température cible pour l'article culinaire (10), la durée de cuisson, un type d'articles culinaires (10), la quantité de retard pour la cuisson de départ, la fin de cuisson et la reprise-demande de cuisson en cas de panne d'électricité, et dans lequel les informations de commande comprennent des réglages pour ajuster un niveau de puissance de fonctionnement de la bobine d'induction (6) en fonction de la température cible à atteindre et à maintenir pendant la durée de cuisson, des réglages pour un profil de chauffage à appliquer à l'induction (6) en fonction du type de l'article culinaire (10) et de la température cible à atteindre et à maintenir pendant la durée de cuisson, des réglages pour le démarrage de la bobine d'induction (6) en fonction du retard de la cuisson de départ, des réglages pour arrêter le fonctionnement de la bobine d'induction (6) en fonction de la fin de la cuisson ou de la durée de cuisson ou débordement, des réglages pour la mise hors tension du cuiseur de chauffage à induction (1) en fonction de la fin de caisson ou la durée de cuisson, des réglages pour reprendre caisson après une panne d'électricité est terminée.

7. Appareil de commande individuel des articles culinaires (1) selon la revendication 6, **caractérisé en ce que** l'antenne est une bobine RF séparée noyée dans la bobine réceptrice (5).

8. Appareil de commande individuel des articles culinaires (1) selon l'une quelconque des revendications 6 ou 7, **caractérisé en ce que** les moyens de communication RF comprennent en outre un récepteur RF, en plus de l'émetteur RF, pour permettre une communication radio bidirectionnelle avec la cuisinière de chauffage par induction (3).

9. Appareil de commande individuel des articles culinaires (1) selon la revendication 8, **caractérisé en ce que** les moyens de communication RF comprennent en outre un démodulateur RF pour démoduler une onde électromagnétique modulée en fréquence produite par la bobine d'induction (6) de la cuisinière de chauffage par induction (3).

10. Appareil de commande individuel des articles culinaires (1) selon l'une quelconque des revendications 1 à 9, **caractérisé en ce qu'**un capteur de débordement pour le montage sur un rebord de l'appareil culinaire (10) et pour détecter le débordement dans l'article culinaire (10) et l'unité de commande (12) est configuré pour provoquer, en cas de débordement, l'unité d'interface utilisateur (11) pour informer audiblement et / ou visuellement l'utilisateur à propos de débordement ou, lorsqu'elle dépend des revendications 6 à 9, pour envoyer des informations de commande à la cuisinière de chauffage par induction (3) pour arrêter le fonctionnement de la bobine d'induction (6).

11. Appareil de commande individuel des articles culinaires (1) selon l'une quelconque des revendications 1 à 10, **caractérisé en ce que** l'unité de commande (12) est configurée pour surveiller une force électromotrice (fem) induite à travers la bobine réceptrice (5) et une évolution temporelle de la température de l'article culinaire (10), pour estimer une puissance transmise à l'article culinaire (10) sur la base de la force électromotrice surveillée (emf), pour rafraîchir et vérifier ladite estimation pendant la surveillance et pour provoquer l'unité d'interface utilisateur (11) pour informer audiblement et / ou visuellement l'utilisateur sur la transmission de puissance actuellement estimée.

12. Système de cuisson sans fil (16) comprenant le dispositif individuel de commande des articles culinaires (1) selon l'une quelconque des revendications 1 à 11 et la cuisinière de chauffage par induction (3).
